# EUROPÄISCHE PATENTANMELDUNG

(11) **EP 4 749 173 A2**
(43) Veröffentlichungstag der Anmeldung: **27.05.2026**
(21) Anmeldenummer: 26172242.5
(22) Anmeldetag: 03.02.2023
(51) Int. Cl.: F16L 59/153

(54) **ISOLIERUNG FÜR EINE KRYOGENE LEITUNGSANORDNUNG, TRÄGERELEMENT, ISOLIERTE LEITUNGSANORDNUNG UND VERFAHREN ZUM ISOLIEREN EINER SOLCHEN**

(30) Priorität: 07.03.2022 DE 102022105275
(62) Teilanmeldung aus: 23703442.6
(71) Anmelder: Witzenmann GmbH, 75175 Pforzheim (DE)
(72) Erfinder: Ehrenberger, David, 75203 Königsbach-Stein (DE)
(74) Vertreter: LBP Lemcke, Brommer & Partner Patentanwälte mbB

(57) **Zusammenfassung**

Vorgeschlagen wird ein Trägerelement (4) zur Verwendung mit einer Isolierung (1), die Isolierung (1) aufweisend: eine Grundfolie; eine Schirmfolie; welche Grundfolie aus einem Material mit geringer Wärmeleitfähigkeit von vorzugsweise etwa 0,01 bis 0,3 W/(m·K) gebildet ist; welche Schirmfolie zur Reflektion von Strahlung im Infrarotbereich ausgebildet ist, vorzugsweise bei einer Wellenlänge von 0,78 bis 1000 µm, höchst vorzugsweise 3 bis 50 µm; wobei die Schirmfolie in Form von mehreren diskreten Abschnitten auf der Grundfolie angeordnet ist, sodass zwischen zwei benachbarten Abschnitten jeweils ein freier Abstand verbleibt; welches Trägerelement (4) entlang seiner Längserstreckung aufweist:
a) einen ersten Abschnitt (4.1), in dem das Trägerelement (4) auf einer ersten Seite (4a) eine Anlagestruktur (4aa) zum vorzugsweise formschlüssigen Anlegen an eine zu isolierende Innenleitung (6) und auf einer der ersten Seite (4a) gegenüberliegenden zweiten Seite (4b) eine erste Verbindungsstruktur (4ba) aufweist, vorzugsweise eine Ausnehmung;
b) einen zweiten Abschnitt (4.2), in dem das Trägerelement (4) auf der ersten Seite (4a) eine zweite Verbindungsstruktur (4ab) zum vorzugsweise formschlüssigen Zusammenwirken mit der ersten Verbindungsstruktur (4ba) auf der zweiten Seite (4b) aufweist, vorzugsweise einen Vorsprung; und
c) einen dritten Abschnitt (4.3), in dem das Trägerelement (4) auf der ersten Seite (4a) die zweite Verbindungsstruktur (4ac) und auf der zweiten Seite (4b) eine Abstandhalterstruktur (4bc) zum vorzugsweise formschlüssigen Zusammenwirken mit einer die Innenleitung (6) umgebenden Außenleitung (8) aufweist.

## Beschreibung

Die Erfindung betrifft mit dem Anspruch 1 ein Trägerelement zur Verwendung mit einer Isolierung für eine kryogene Leitungsanordnung.

Anspruch 13 betrifft ein Verfahren zum Isolieren einer Leitungsanordnung unter Verwendung einer solchen Isolierung.

Um kryogene Leitungsanordnungen, insbesondere zum Leiten von flüssigem Wasserstoff, gegenüber der Umgebung thermisch zu isolieren, ist nach dem Stand der Technik vorgesehen, eine Vakuumisolierung zwecks Unterbindung von Wärmeleitung und Konvektion mit einer sogenannten Multi-Layer-Insulation (MLI) zu kombinieren. Die MLI weist dabei mindestens eine Materiallage auf, die zur Unterbindung von Wärmeeintrag durch Strahlung ausgebildet ist, insbesondere regelmäßig eine Metalllage. Typischerweise wird die MLI in Schichten abwechselnd mit Abstandshalterfolien auf eine Innenleitung der kryogenen Leitungsanordnung aufgewickelt. Die genannte Innenleitung ist regelmäßig mittels sogenannter Abstandshalter in einer Außenleitung gelagert, welche Abstandshalter dafür sorgen, dass nur ein geringer Kontakt zwischen Innenleitung und Außenleitung besteht.

Nachteilig bei einem solchen Stand der Technik ist anzusehen, dass bislang keine Leitungsanordnungen für kryogene Anwendungen bekannt sind, die unter automotiven Randbedingungen, d.h. solchen Randbedingungen, wie sie bei Automobilanwendungen typischerweise auftreten, eine ausreichend lange Lebensdauer besitzen. Insbesondere unter Schwingbelastung ist Verschleiß der MLI und eine Verschiebung der einzelnen Lagen durch infinitesimal kleine lokale Reibwertunterschiede zu erwarten, wodurch auch die Isolierwirkung negativ beeinträchtigt wird.

Wenn die MLI durch Wickeln auf der Innenleitung befestigt wird, besteht zudem nach dem Stand der Technik das grundlegende Problem, dass auf diese Weise eine gegen Strahlung wirksame Materiallage aus dem Bereich der Innenleitung bis in den Bereich der Außenleitung durchläuft, sodass in nachteiliger Weise ein Wärmeleitungspfad geschaffen ist, welche die Isolierwirkung negativ beeinträchtigt.

US 10,161,557 B2 offenbart eine Transferleitung für kryogene Flüssigkeiten. Diese Transferleitung besteht auf herkömmliche Weise aus einem röhrenförmigen Außenmantel, in dem eine Anzahl von Innenrohren untergebracht sind, die jeweils für den Transport von kryogenen Flüssigkeiten vorgesehen sind. Der Außenmantel enthält einen zylinderförmigen Wärmeschutz, der eine isolierende Wand um die inneren Rohre bildet. Der Wärmeschutz schützt die Rohre vor externer Strahlung bei 300 K und besteht vorzugsweise aus Aluminium, Kupfer oder einem anderen geeigneten Material.

DE 35 32 714 A1 offenbart eine Superisolierung, die gleichzeitig als Distanzhalterung zwischen zwei druckbelastbaren Flächen dient, wobei sich kreuzende Stege in mindestens zwei Schichten unter Zwischenlage von reflektierenden Folien vorgesehen sind. Dabei ist vorgesehen, die reflektierenden Folien nicht zu unterteilen, damit eine flächig durchgehende Superisolierung ohne Strahlungsfenster gewahrt bleibt.

AT 300065 B offenbart ein koaxiales Rohrsystem aus mindestens zwei konzentrischen Rohren und einem zwischen den Rohren bestehenden Temperaturgefälle, beispielsweise ein in supraleitendem Zustand betriebenes elektrisches Kabel oder ein Rohrsystem für den Transport erwärmter oder gekühlter, flüssiger oder gasförmiger Medien, wobei die Rohre durch gesonderte Abstandshalter in konzentrischer Lage zueinander gehalten werden.

FR 656 724 A offenbart eine Hülle oder einen Mantel, der in einem bestimmten Abstand von einem zu isolierenden Rohr angebracht ist. Zwischen dem Rohr und der Hülle ist die Isolierung angeordnet. Der Abstand zwischen dem Rohr und der Hülle wird durch voneinander unabhängige Abstandshalter aufrechterhalten. Die Abstandshalter ruhen auf dem Rohr und vorzugsweise auch auf dem Mantel an nur wenigen Stellen, um die Wärmeübertragung vom Rohr auf den Mantel und folglich über die Abstandshalter nach außen zu reduzieren. Zur Montage sind die Abstandshalter mit Ausnehmungen versehen, durch die ein Befestigungsband geführt ist. Das Befestigungsband kann fest angezogen werden, um die Abstandshalter auf dem Rohr zu fixieren.

Es besteht Bedarf an einer verbesserten kryogenen Leitungsanordnung, die sich auch für typische Belastungen im Automobilbereich eignet und dabei eine ausreichende Lebensdauer besitzt. In diesem Zusammenhang sind folgende Aspekte relevant: Erhaltung des Vakuums im Zwischenraum zwischen Innenleitung und Außenleitung; druckfreie Einbringung und Lagerung der MLI; sichere Lagerung der Innenleitung in der Außenleitung; Gewährleistung einer Biegebewegung mit geringem Verschließ der MLI; keine Zerstörung der MLI durch Bewegungen; Schaffung einer Geometrie zur günstigen Evakuierung des Zwischenraums; und Gewährleistung einer günstigen automatisierten Montierbarkeit.

Die genannte Aufgabe wird erfindungsgemäß gelöst durch ein Trägerelement gemäß Anspruch 1 zur Verwendung mit einer Isolierung für eine kryogene Leitungsanordnung sowie durch ein Verfahren zum Isolieren einer Leitungsanordnung gemäß Anspruch 13.

Vorteilhafte Weiterbildungen der Erfindung sind in den Unteransprüchen definiert.

Eine Isolierung für eine kryogene Leitungsanordnung weist auf: eine Grundfolie; eine Schirmfolie; welche Grundfolie aus einem Material mit geringer Wärmeleitfähigkeit von vorzugsweise etwa 0,01 bis 0,3 W/(m·K) gebildet ist; welche Schirmfolie zur Reflektion von Strahlung im Infrarotbereich ausgebildet ist, vorzugsweise bei einer Wellenlänge von 0,78 bis 1000 µm, höchst vorzugsweise 3 bis 50 µm; wobei die Schirmfolie in Form von mehreren diskreten Abschnitten auf der Grundfolie angeordnet ist, sodass zwischen zwei benachbarten Abschnitten jeweils ein freier Abstand verbleibt.

Durch den genannten freien Abstand lässt sich erreichen, dass beim Wickeln der Isolierung auf die Innenleitung einer Leitungsanordnung keine Lage der Schirmfolie durchgehend von innen bis nach außen verläuft und auf diese Weise einen nachteiligen Wärmeleitungspfad bildet.

Wenn vorliegend von einer Grundfolie die Rede ist, beschränkt sich dies nicht auf Folien als solche, sondern schließt auch andere Trägermaterialien mit ein. Während eine Folie ein flächiges Erzeugnis ohne Löcher darstellt, sind im Rahmen der Erfindung alternativ beispielsweise auch ein Netz oder ein Textil einsetzbar.

Wenn vorliegend von einer Schirmfolie die Rede ist, beschränkt sich dies ebenfalls nicht auf Folien als solche. Beispielsweise kann die Schirmfolie auch als eine (bereichsweise) Beschichtung der Grundfolie (bzw. des Trägermaterials) ausgebildet sein.

Eine mögliche konkrete Ausgestaltung wäre also eine nicht durchgängig metallisierte Kunststofffolie.

Bei einer ersten Weiterbildung der Isolierung kann vorgesehen sein, dass die Schirmfolie auf die Grundfolie aufgeklebt oder durch Nähen, Falzen oder Clinchen auf der Grundfolie befestigt ist. Auf diese Weise ist die Isolierung besonders einfach und kostengünstig herzustellen.

Alternativ kann die Grundfolie mit dem Material der Schirmfolie bereichsweise beschichtet sein, wie bereits angemerkt wurde.

Eine andere Weiterbildung der Isolierung sieht vor, dass die Schirmfolie in Form von Streifen auf der Grundfolie angeordnet ist, vorzugsweise in Form regelmäßig angeordneter Streifen mit jeweils gleicher Breite und/oder mit gleichem, konstantem Abstand zwischen den Streifen. Diese Weise lässt sich leicht der geforderte freier Abstand erreichen, wobei die Isolierung weiterhin einfach und kostengünstig zu fertigen ist

Es hat sich als besonders günstig erwiesen, wenn bei einer entsprechenden Weiterbildung der Isolierung das Material für die Grundfolie ein Glasfaservlies oder ein Kunststoff(-textil), insbesondere DuPont^{™} Kapton^{®} Polyimid, PET, PCV, ... ist. Alle diese Materialien weisen die geforderte geringe Wärmeleitfähigkeit bei ausreichender Flexibilität, einfacher Verarbeitbarkeit, niedrigem Preis und guter Verfügbarkeit auf.

Es hat sich weiterhin als besonders günstig erwiesen, wenn bei einer anderen Weiterbildung der Isolierung das Material für die Schirmfolie ein reines Metall ist, vorzugsweise Kupfer, Aluminium, Gold oder Silber, oder wenn die Schirmfolie als eine metallisierte Kunststofffolie ausgebildet ist. Alle diese Materialien erreichen eine gute Unterbindung von Wärmeeinträgen durch Strahlung.

Als besonders vorteilhaft hat es sich erwiesen, wenn in Weiterbildung der Isolierung die Grundfolie ein Glasfaservlies und die Schirmfolie eine Aluminiumfolie ist, wobei vorzugsweise und ohne Beschränkung die Aluminiumfolie eine Dicke von etwa 0,05 mm und das Glasfaservlies eine Dicke von etwa 0,3 mm aufweist.

Zur einfachen und prozesssicheren Verwendung der genannten Isolierung schlägt die Erfindung ein Trägerelement vor, welches Trägerelement erfindungsgemäß entlang seiner Längserstreckung folgende Abschnitte aufweist: a) einen ersten Abschnitt, in dem das Trägerelement auf einer ersten Seite eine Anlagestruktur zum vorzugsweise formschlüssigen Anlegen an eine zu isolierende Innenleitung und auf einer der ersten Seite gegenüberliegenden zweiten Seite eine erste Verbindungsstruktur aufweist, vorzugsweise eine Ausnehmung; b) einen zweiten Abschnitt, in dem das Trägerelement auf der ersten Seite eine zweite Verbindungsstruktur zum vorzugsweise formschlüssigen Zusammenwirken mit der ersten Verbindungsstruktur auf der zweiten Seite aufweist, vorzugsweise einen Vorsprung; und c) einen dritten Abschnitt, in dem das Trägerelement auf der ersten Seite die zweite Verbindungsstruktur und auf der zweiten Seite eine Abstandhalterstruktur zum vorzugsweise formschlüssigen Zusammenwirken mit einer die Innenleitung umgebenden Außenleitung aufweist.

Ein solches Trägerelement lässt sich vorteilhafter Weise zusammen mit der Isolierung um die Innenleitung einer zu isolierenden Leitungsanordnung wickeln und sorgt auf diese Weise neben einer Lagerung und Beanstandung von Lagen der Isolierung zusätzlich noch für die Lagerung und Beanstandung der Außenleitung einer zu isolierenden Leitungsanordnung.

Um das Trägerelement gut wickeln zu können, und damit es auch den weiteren Anforderungen im Automobilbereich bzw. bei der Evakuierung, die regelmäßig bei relativ hohen Temperaturen in einem Bereich von 150 °C bis 200 °C erfolgt, gerecht werden zu können, sieht eine spezielle Weiterbildung vor, dass das Trägerelement in einem flexiblen, um die Innenleitung herum wickelbaren Material, vorzugsweise Kunststoff, höchst vorzugsweise PEEK (Polyetheretherketon), ausgebildet ist.

Als besonders vorteilhaft hat sich in der Praxis eine Ausgestaltung des erfindungsgemäßen Trägerelements erwiesen, welches a) in dem ersten Abschnitt auf der ersten Seite eben ausgebildet ist und auf der zweiten Seite eine Ausnehmung aufweist, oder welches in dem ersten Abschnitt auf der ersten Seite eine zu der Wellung eines Wellschlauchs zumindest teilweise komplementäre Ausgestaltung und auf der zweiten Seite eine Ausnehmung aufweist; und b) in dem zweiten Abschnitt auf der ersten Seite einen zu der Ausnehmung in dem ersten Abschnitt komplementären Vorsprung und auf der zweiten Seite eine Ausnehmung aufweist, vorzugsweise eine mit der Ausnehmung in dem ersten Abschnitt identische Ausnehmung; und c) in dem dritten Abschnitt auf der ersten Seite einen zu der Ausnehmung in dem zweiten Abschnitt komplementären Vorsprung und auf der zweiten Seite die Abstandhalterstruktur aufweist.

Auf diese Weise kann das Trägerelement mit dem ersten Abschnitt mit der Innenleitung - je nach deren Ausgestaltung - zusammenwirken, mit dem Vorsprung in dem zweiten Abschnitt mit der Ausnehmung des ersten Abschnitts zusammenwirken, und mit dem Vorsprung in dem dritten Abschnitt mit der Ausnehmung in dem zweiten Abschnitt zusammenwirken, während die Abstandhalterstruktur für die Lagerung der Außenleitung sorgt.

Vorzugsweise ist in diesem Zusammenhang weiter vorgesehen, dass das Trägerelement bei entsprechender Weiterbildung derart ausgebildet ist, dass bei einem spiralförmigen Aufwickeln des Trägerelements die erste Verbindungsstruktur in dem ersten Abschnitt und die zweite Verbindungsstruktur in dem zweiten Abschnitt und/oder die erste Verbindungsstruktur in dem zweiten Abschnitt und die zweite Verbindungsstruktur in dem dritten Abschnitt verbindend zusammenwirken, bevorzugt jeweils paarweise miteinander in Eingriff stehen. Erreicht werden kann dies über entsprechende relative Längen der einzelnen Abschnitte bezogen auf eine Abmessung, insbesondere den Außenumfang, einer zu isolierenden (Innen-) Leitung.

Als besonders vorteilhaft hat es sich erwiesen, wenn das Trägerelement bei entsprechender Weiterbildung so ausgebildet ist, dass zwischen den zusammenwirkenden Verbindungsstrukturen wenigstens eine Lage der Isolierung anordenbar ist. Die Isolierung kann auf diese Weise einfach fixiert und sicher gehalten werden.

Eine andere Weiterbildung des erfindungsgemäßen Trägerelements sieht vor, dass die Abstandhalterstruktur einen Durchbruch aufweist, welcher Durchbruch vorzugsweise quer zu einer Längserstreckung des Trägerelements und parallel zu den ersten und zweiten Seiten orientiert ist.

Ein solcher Durchbruch kann dazu dienen, ein fadenförmiges Element, beispielsweise einen Draht, durch die Abstandhalterstruktur bzw. mehrere solche Abstandhalterstrukturen von verschiedenen Trägerelementen hindurchzuführen, um diese vor dem Einbringen in die Außenleitung geeignet zu verformen, beispielsweise zu tordieren. Auf diese Weise lässt sich die Montage der Außenleitung vereinfachen.

Eine wieder andere Weiterbildung des erfindungsgemäßen Trägerelements sieht in diesem Zusammenhang vor, dass die Abstandhalterstruktur mit wenigstens einer seitlichen Ausnehmung versehen ist. Sie wird dadurch flexibler und lässt sich leichter verformen - insbesondere, wie vorstehend beschrieben.

Um die Wechselwirkung mit der regelmäßig, jedoch ohne Beschränkung als Wellschlauch ausgebildeten Außenleitung zu verbessern, kann eine wieder andere Weiterbildung des erfindungsgemäßen Trägerelements noch vorsehen, dass die Abstandhalterstruktur außen konvex oder mit einer zu der Wellung eines Wellschlauchs zumindest teilweise komplementärer Formgebung ausgebildet ist.

Es hat sich als besonders vorteilhaft erwiesen, wenn bei entsprechender Weiterbildung die Isolierung als vorkonfektionierte Isolierung mit wenigstens einem bereits aufgebrachtem Trägerelement ausgebildet ist, weil hierdurch die Handhabung bei der Herstellung erleichtert wird.

Eine isolierte Leitungsanordnung mit einer Isolierung der genannten Art weist auf: eine Innenleitung; eine Außenleitung; wobei die Isolierung spiralförmig umfänglich und mit einer axialen Verlaufskomponente, d.h. ähnlich wie ein Griffband bei einem Tennisschläger oder einem Fahrradlenker (schräg) um die Innenleitung gewickelt ist, und bei der die Außenleitung die Innenleitung und die Isolierung umgibt.

Auf diese Weise ergibt sich in radialer Richtung ein sicherer Schutz vor Wärmeeinträgen durch Strahlung, ohne dass es in nachteiliger Weise zu einem durchgängigen Leitungspfad käme.

Besonders bevorzugt ist eine Weiterbildung der isolierten Leitungsanordnung, bei der zusätzlich wenigstens ein erfindungsgemäßes Trägerelement Verwendung findet; bei der das Trägerelement zusammen mit der Isolierung um die Innenleitung gewickelt ist, wobei das Trägerelement bei einer bestimmten axialen Position spiralförmig auf die Innenleitung aufgewickelt ist, sodass zwischen zwei Wicklungen des Trägerelements jeweils eine Lage der Isolierung angeordnet ist, vorzugsweise eingeklemmt.

Das Trägerelement sorgt einerseits für eine Beanstandung der einzelnen Lagen bzw. Wicklungen der Isolierung und andererseits für deren sichere Fixierung nebst Lagerung und Beanstandung der Außenleitung.

Entsprechend ist bei einer anderen Weiterbildung der isolierten Leitungsanordnung vorgesehen, dass die Außenleitung außen an der Abstandhalterstruktur oder den Abstandhalterstrukturen anliegt.

Um eine gute Beweglichkeit der isolierten Leitungsanordnung zu gewährleisten, sieht eine andere Weiterbildung vor, dass die Isolierung entlang der Leitungsanordnung einen oder mehrere Falze aufweist, bevorzugt jeweils mindestens einen Falz zwischen zwei Trägerelementen. Die genannten Falze stellen eine Art Längenreserve zur Verfügung, um auf diese Weise Verformungen und Bewegungen der Leitungsanordnung zuzulassen.

Zusätzlich oder alternativ kann bei noch einer anderen Weiterbildung der Leitungsanordnung vorgesehen sein, dass die Isolierung entlang der Leitungsanordnung aus mehreren getrennten Abschnitten gebildet ist, welche Abschnitte sich kämmend überlappen und dadurch einen Schiebesitz bilden. Auf diese Weise ist für eine gute Verform- und Beweglichkeit der Leitungsanordnung gesorgt.

Es hat sich in der Praxis als besonders vorteilhaft erwiesen, wenn bei entsprechender Weiterbildung der Leitungsanordnung die Innenleitung und/oder die Außenleitung als Wellschlauch ausgebildet ist/sind, vorzugsweise als Ringwellschlauch, höchst vorzugsweise aus Metall, beispielsweise Stahl oder Edelstahl. Derartige Leitungen sind selbst bei dünner Wandstärke stabil und flexibel, eignen sich also in besonderer Weise für Anwendungen im Automobilbereich.

Um zusätzliche Stabilität und Druckfestigkeit zu erreichen, sieht noch eine andere Weiterbildung der Leitungsanordnung vor, dass die Innenleitung mit einer Geflechtummantelung versehen ist, vorzugsweise aus einem monofilen Geflecht, und dass die Isolierung oder - bei entsprechender Ausgestaltung - das Trägerelement um die Geflechtummantelung gewickelt ist.

Bevorzugt ist der Zwischenraum zwischen der Innenleitung und der Außenleitung evakuiert, um Wärmeeintrag durch Konduktion oder Konvektion zu unterbinden.

Ein erfindungsgemäßes Verfahren zum thermischen Isolieren einer Leitungsanordnung basiert auf der Verwendung einer Isolierung der genannten Art, wobei: a) die Isolierung spiralförmig umfänglich und mit einer axialen Verlaufskomponente um eine Innenleitung gewickelt wird; und dann b) eine Außenleitung um die Innenleitung und die Isolierung herum angeordnet wird.

Auf die hiermit erreichbaren Vorteile wurde weiter oben bereits detailliert hingewiesen. Darüber hinaus ist das erfindungsgemäße Verfahren in vorteilhafter Weise leicht und auch automatisiert ausführbar.

Das erfindungsgemäße Verfahren beinhaltet die Verwendung wenigstens eines erfindungsgemäßen Trägerelements, wobei in Schritt a) das Trägerelement zusammen mit der Isolierung um die Innenleitung gewickelt wird, wobei das Trägerelement bei einer bestimmten axialen Position spiralförmig vorzugsweise direkt auf die Innenleitung aufgewickelt wird, sodass eine Lage der Isolierung jeweils zwischen zwei Wicklungen des Trägerelements angeordnet wird, vorzugsweise eingeklemmt.

Auch auf die hiermit erreichbaren Vorteile wurde weiter oben bereits detailliert hingewiesen.

Eine Weiterbildung des erfindungsgemäßen Verfahrens sieht vor, dass vor Schritt b) die Abstandhalterstruktur des Trägerelements in ihrer radialen Erstreckung (bezogen auf die Leitungsanordnung) verringert wird, bevorzugt durch Torsion, wobei höchst vorzugsweise ein Zustand mit verringerter radialer Erstreckung erreicht und zumindest temporär fixiert wird, bevorzugt und bei entsprechender Ausgestaltung mittels eines fadenförmigen Elements, zum Beispiel ein Draht, das bzw. der durch den Durchbruch geführt wird, und dass nach Schritt b) die Verringerung der radialen Erstreckung beseitigt wird, insbesondere durch Entfernen des fadenförmigen Elements.

Hierdurch lässt sich die Herstellung einer Leitungsanordnung vereinfachen, weil die Außenleitung problemlos auf die Innenleitung mit der aufgewickelten Isolierung samt Trägerelement aufgezogen werden kann.

Bevorzugt wird der Zwischenraum zwischen Innen- und Außenleitung anschließend evakuiert, wie bereits angemerkt.

Vorliegend wird demnach vorzugsweise vorgeschlagen, eine (Schlauch-) Leitung mit einer Vakuumisolierung gegen Konduktion und einer Multi-Layer-Insulation (MLI) zur Unterbindung der Strahlung zu versehen.

Die Schlauchleitung kann optional zusätzlich mit beispielsweise einem Geflecht zur Druckabstützung versehen sein. Die MLI wird bevorzugt über durch ein Trägerelement gelagert/fixiert, wie bereits beschrieben. Das Trägerelement ist vorzugsweise aus einem Kunststoff, höchst vorzugsweise aus PEEK, hergestellt.

Das Trägerelement ist bei entsprechender Ausgestaltung in drei Abschnitte aufgeteilt, nämlich: 1) Fixierungsabschnitt, 2) Abschnitt zur Lagerung der MLI, 3) Abschnitt zur Lagerung der isolierten inneren Schlauchleitung in der Außenleitung (Abstandshalter mit Gleitelement für Montage und Bewegung).

Bei entsprechender Ausgestaltung weist das Trägerelement in Abschnitt 1) Wirkflächen auf, welche sich auf der Außenseite der inneren Schlauchleitung (Innenleitung) abstützen und in die Wellentäler der Schlauchleitung, welche wiederum vorzugsweise aus einem Ringwellschlauch besteht, eingreifen und das Trägerelement in axialer Richtung fixieren. Ist ein Geflecht verbaut, so kann das Trägerelement über einen Reibschluss auf dessen Oberfläche fixiert werden (beispielsweise durch Verwendung von Kabelbinder).

Weiterhin können an dem Trägerelement in Abschnitt 2) wechselseitig Wirkflächen angeordnet sein, welche mit der MLI ein Wirkflächenpaar bilden. Das Trägerelement kann bei einer entsprechenden Ausführung in dem Abschnitt 2) ein Profil aufweisen, welches durch einen Wickelprozess auf einen Volumenkörper (vorliegend die Innenleitung) formschlüssig in sich selbst eingreift und sich dadurch fixiert. Dies ist vergleichbar mit einem Keder oder einem Druckverschlussbeutel. Die entstehende Schnappverbindung kann eine oder mehrere Lagen der MLI im Fügespalt aufnehmen, in radialer Richtung beabstanden und fixieren.

Auch der Abschnitt 3) ist vorzugsweise mit Wirkflächen zum Eingriff in entsprechende Strukturen in dem Abschnitt 2) ausgestattet, weist aber bevorzugt in radialer Richtung zusätzliche Wirkflächen auf, welche vorzugsweise konvex ausgeführt sind und mit einer Wirkfläche an der Innenwand der Außenleitung eine Wirkflächenpaar bilden. Über dieses Paar kann die innere Leitung (Innenleitung) gelagert und die MLI vor Kontakt mit der Außenleitung bewahrt werden. Auf diese Weise sind außerdem Wirkflächen zur Einführung/Montage der Isolierten Innenleitung in die Außenleitung vorhanden. Die Wirkflächen mit Kontakt zur Außenleitung sind kleinstmöglich ausgeführt, um eine konduktive Wärmeübertragung nach Möglichkeit zu minimieren.

Bei entsprechender Ausgestaltung kann das Trägerelement in Abschnitt 3) weitere Wirkflächen aufweisen, welche bei Verwendung eines Ringwellschlauchs als Außenleitung formschlüssig in Kontakt zu Wirkflächen an den Innenflanken des Ringwellschlauchs treten. Hierdurch wird eine axiale Fixierung ermöglicht.

Darüber hinaus ist es möglich, wie weiter oben bereits beschrieben, dass Trägerelement in dem Abschnitt 3) durch beispielsweise Torsion im Durchmesser zu verringern, diese Position vorzugsweise über einen axial lösbaren Draht zu fixieren, und dadurch eine einfache Montage in der Außenleitung zu ermöglichen. Um nach Positionierung die Vorspannung zu lösen und Wirkflächenpaare zwischen Abschnitt 3) und der Außenleitung zur Fixierung der Leitungen relativ zueinander in Kontakt zu bringen, kann der axial lösbare Draht nach Positionierung ausgezogen werden, sodass die Wirkflächen in dem Abschnitt 3) mit Wirkflächen der Außenleitung in Kontakt treten und beide Elemente zueinander positioniert werden.

Diese radiale Beweglichkeit mit elastischer Vorspannung in dem Abschnitt 3) kann beispielsweise durch tangentiale Stege dargestellt werden, welche radial außen einen optional in Umfangsrichtung durchbrochenen Ring mit den Wirkflächen tragen (ähnlich wie bei einer Fahrradbremsscheibe). Unter Torsionsbelastung verbiegen sich die Stege, und der Ring verringert den Durchmesser.

Weiterhin ist es auch möglich, dass das Trägerelement in dem Abschnitt 3) optional mit Ausnehmungen in Umfangsrichtung versehen ist, sodass es bei der Montage in axialer Richtung verkippt, somit den Durchmesser reduziert und eine Montage ermöglicht. Eine geringfügige Rückbewegung der Innenleitung bewirkt ein Aufstellen in dem Abschnitt 3) und damit ein Verspannen in der Außenleitung oder ein Eingreifen in optional vorhanden Wellen der Außenleitung (nach Art einer Kralle).

Die MLI umfasst, wie bereits beschrieben, eine Grundfolie und eine Schirmfolie. Die Grundfolie besteht bevorzugt aus einem Werkstoff mit geringer Wärmeleitfähigkeit, vorzugsweise 0,01 bis 0,3 W/(m·K), wie beispielsweise einem Glasfaservlies oder einem Kunststoff(-textil). Dier Schirmfolie zur Reflektion von Strahlung im Infrarotbereich, vorzugsweise bei einer Wellenlänge von 0,78 bis 1000 µm, höchst vorzugsweise 3 bis 50 µm, ist vorzugsweise aus reinen Metallen ausgebildet, höchst vorzugsweise aus Kupfer, Aluminium, Gold oder Silber, worauf bereits hingewiesen wurde. Alternativ kann auch eine metallisierte Kunststofffolie als Schirmfolie eingesetzt werden, wobei hier die Metallisierung aus einem der genannten Metalle gebildet sein kann.

Die Schirmfolie ist diskontinuierlich in Form von einzelnen Stücken oder Abschnitten auf der Grundfolie aufgebracht, um bei einer spiralförmigen Wicklung keinen durchgehenden konduktiven Wärmeleitpfad zu erhalten. Die Schirmfolienstücke bzw. -Abschnitte sind, vorzugsweise abhängig vom Radius bzw. Außenumfang des Werkstücks (Innenleitung), auf welchem das spezifische Schirmfolienstück nach erfolgter Montage verortet ist, in der Länge und dem Abstand zum benachbarten Stück angepasst, sodass durch die Spiralwicklung einzelne Schirmringe entstehen, die die Wärmestrahlung reflektieren.

Zur Sicherstellung der Flexibilität weist eine weitere Ausgestaltungsform der beschriebenen Erfindung eine MLI auf, welche zwischen den einzelnen Trägerelementen mit einem oder mehreren Falzen ausgeführt ist, worauf ebenfalls weiter oben bereits hingewiesen wurde. Die Falze ermöglichen eine axiale Längenänderung der MLI bei Biegung der Gesamtleitung (Leitungsanordnung).

Alternativ oder zusätzlich kann diese Funktion auch durch axial getrennte MLI-Elemente mit (jeweils wenigstens) einem Trägerelement dargestellt werden, wobei die MLI-Elemente sich kämmend überlappen und dadurch einen Schiebesitz bilden. Auch hierauf wurde weiter oben bereits hingewiesen.

Zur Montage der MLI wird vorgeschlagen, eine Schlauchleitung (Innenleitung), vorzugsweise aus einem Ringwellschlauch, mit einer Druckabstützung bestehend aus einem Geflecht, höchst vorzugsweise aus einem metallischen Geflecht, besonders bevorzugt aus einem monofilen Geflecht, als fluidführendes Leitungselement zu versehen. Dieses Leitungselement wird zur Stabilisierung innen mit einem Dorn versehen, welcher Dorn vorzugsweise aus einem Faserverbundwerkstoff, höchst vorzugsweise aus kohlenstofffaserverstärktem Kunststoff, hergestellt ist und eine hohe Steifigkeit aufweist. Zum Verspannen der Leitung auf dem Dorn kann auf dem Dorn ein elastisches Element vorgesehen sein, welches mit einem Innendruck beaufschlagt wird, sich dabei in radialer Richtung ausdehnt und dadurch die Leitung verspannt sowie zentriert. Zur verbesserten Zentrierung kann das elastische Element lokal am Dorn befestigt sein, sodass sich durch den Innendruck Längswellen ausbilden, die sich über den Umfang gleichmäßig ausformen.

Die MLI kann anschließend über einen Wickelprozess zusammen mit dem Trägerelement oder den Trägerelementen auf das Leitungselement aufgebracht werden. Abschließend wird die Außenleitung montiert, gegebenenfalls nachdem zuvor das Trägerelement bzw. die Trägerelemente in ihrem Außendurchmesser reduziert wurden, wie weiter oben beschrieben.

Die Erfindung schafft auf diese Weise eine erhöhte Flexibilität der MLI, verbunden mit der Integration von Distanzhaltern mit geringem Wärmeübergang, sowie die Möglichkeit zur automatisierten Montage.

Weitere Eigenschaften und Vorteile der Erfindung ergeben sich aus der nachfolgenden Beschreibung von Ausführungsbeispielen anhand der Zeichnung.
Figur 1 zeigt schematisch eine Isolierung für kryogene Leitungsanordnungen;
Figur 2 zeigt schematisch ein erfindungsgemäßes Trägerelement in einer seitlichen Ansicht;
Figur 3 zeigt schematisch eine mögliche relative Anordnung von Isolierung und Trägerelement;
Figur 4 zeigt schematisch und im Längsschnitt eine mögliche Ausgestaltung der isolierten Leitungsanordnung mit einem zusätzlichen fadenförmigen Element; und
Figur 5 zeigt schematisch und im Längsschnitt eine weitere mögliche Ausgestaltung der isolierten Leitungsanordnung.

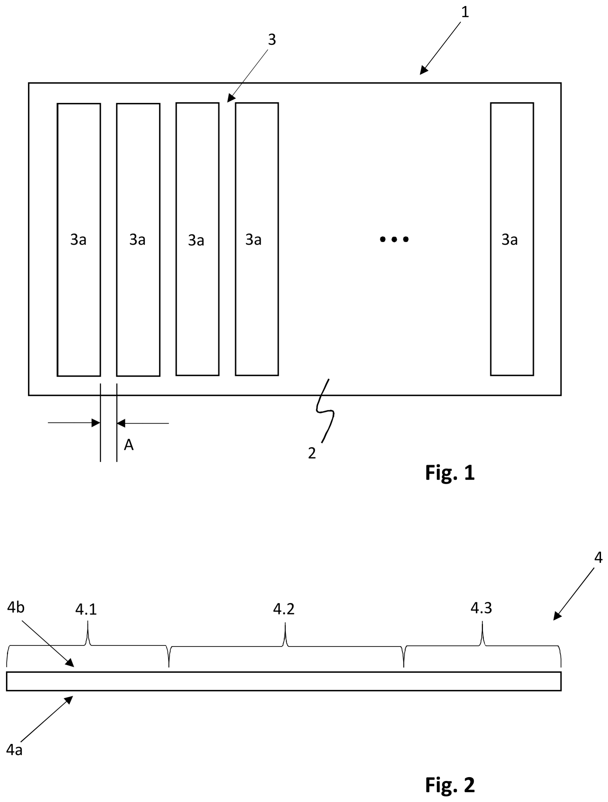

Figur 1 zeigt schematisch eine Isolierung für kryogene Leitungsanordnung, welche Isolierung insgesamt mit dem Bezugszeichen 1 bezeichnet ist. Dargestellt ist in Figur 1 einen Zustand der Isolierung 1 vor deren Verwendung zum Isolieren einer Leitungsanordnung, zu welchem Zweck die Isolierung 1 um die Leitungsanordnung gewickelt wird, worauf weiter unten noch genauer eingegangen wird.

Gemäß der Darstellung in Figur 1 umfasst die Isolierung 1 ein Trägermaterial in Form einer Grundfolie 2, welche Grundfolie 2 aus einem Material mit einer geringen Wärmeleitfähigkeit gebildet ist, vorzugsweise 0,01 bis 0,3 W/(m·K), vorzugsweise aus Glasfaservlies, welches sogar eine Wärmeleitfähigkeit von nur etwa 1,5 mW/(m·K) aufweisen kann. Weiterhin umfasst Isolierung 1 eine Schirmfolie 3, die zur Reflexion von Strahlung im Infrarotbereich ausgebildet ist, vorzugsweise bei einer Wellenlänge von 0,78 bis 1000 µm, höchst vorzugsweise 3 bis 50 µm. Die Schirmfolie 3 ist jedoch nicht in Form einer einzelnen, durchgängigen Lage auf die Grundfolie 2 aufgebracht, vorzugsweise durch Nähen, Falzen oder Clinchen, sondern besteht aus mehreren diskreten Abschnitten 3a, wobei zwischen zwei benachbarten Abschnitten 3a jeweils ein freier Abstand A verbleibt. Vorliegend weisen die Abschnitte 3a der Schirmfolie 3 eine rechteckige Form auf, wobei alle Abschnitte 3a dieselbe Form besitzen und zwischen zwei Abschnitten 3a jeweils derselbe freie Abstand A besteht. Die Erfindung ist jedoch grundsätzlich nicht auf derartige Anordnungen beschränkt. Beispielsweise können die Abschnitte 3a jeweils unterschiedliche Breiten, Formen und/oder Abstände zueinander aufweisen.

Wie schon erwähnt wurde, kommen außer (Grund-)Folien auch andere Trägermaterialien in Betracht. Die Schirmfolie kann in Form einer Beschichtung auf die Grundfolie bzw. das Trägermaterial aufgebracht sein.

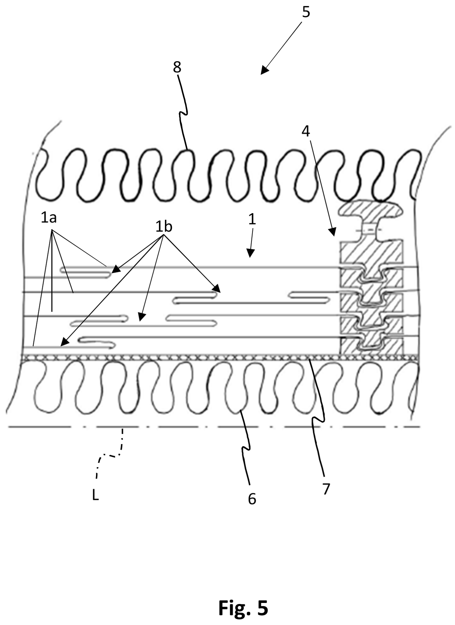

Figur 2 zeigt schematisch ein Trägerelement 4, welches Trägerelement 4 speziell zur Verwendung mit einer Isolierung gemäß Figur 1 ausgebildet und konzipiert ist. Das Trägerelement 4 weist entlang seiner Längserstreckung nacheinander folgende drei Abschnitte auf, die nachfolgend mit den Bezugszeichen 4.1 bis 4.3 bezeichnet sind:
a) einen ersten Abschnitt 4.1, in dem das Trägerelement 4 auf einer ersten Seite 4a eine Anlagestruktur zum Anlegen an eine (hier nicht gezeigt) zu isolierende Innenleitung und auf einer der ersten Seite 4a gegenüberliegenden zweiten Seite 4b eine erste Verbindungsstruktur aufweist, vorzugsweise eine Ausnehmung, welche erste Verbindungsstruktur in Figur 2 nicht erkennbar ist (vergleiche Figuren 5 und 6);
b) einen zweiten Abschnitt 4.2, in dem das Trägerelement 4 auf der ersten Seite 4a eine zweite Verbindungsstruktur (nicht erkennbar; vergleiche Figuren 5 und 6) zum Zusammenwirken mit der ersten Verbindungsstruktur auf der zweiten Seite 4b aufweist, vorzugsweise einen Vorsprung; und
c) einen dritten Abschnitt 4.3, in dem das Trägerelement 4 auf der ersten Seite 4a erneut die bereits genannte zweite Verbindungsstruktur und auf der zweiten Seite 4b eine Abstandhalterstruktur (nicht erkennbar; vergleiche Figuren 5 und 6) zum Zusammenwirken mit einer die Innenleitung umgebenden Außenleitung (hier nicht gezeigt) aufweist.

Bei bestimmungsgemäßer Verwendung wird das Trägerelement 4, welches bevorzugt aus PEEK hergestellt ist, mit der ersten Seite 4a in dem ersten Abschnitt 4.1 an eine zu isolierende Innenleitung angelegt und dann spiralförmig aufgewickelt, sodass insbesondere die erste Seite 4a in dem zweiten Abschnitt 4.2 mit der zweiten Seite 4b in dem ersten Abschnitt 4.1 und die erste Seite 4a in dem dritten Abschnitt 4.3 mit der zweiten Seite 4b in dem zweiten Abschnitt 4.2 in Wechselwirkung tritt. Der zweite Abschnitt 4.2 kann insbesondere länger ausgebildet sein als die Abschnitte 4.1 und 4.3, sodass beim Aufwickeln die erste Seite 4a in dem zweiten Abschnitt 4.2 auch mit der zweiten Seite 4b in dem zweiten Abschnitt 4.2 in Wechselwirkung tritt.

Das Trägerelement 4 kann zu seinen Enden hin eine abnehmende Dicke aufweisen, was in Figur 2 nicht dargestellt ist. Auf diese Weise ist beim Wickeln eine stetige Ausformung der (Außen-) Kontur des Trägerelements 4 erreichbar.

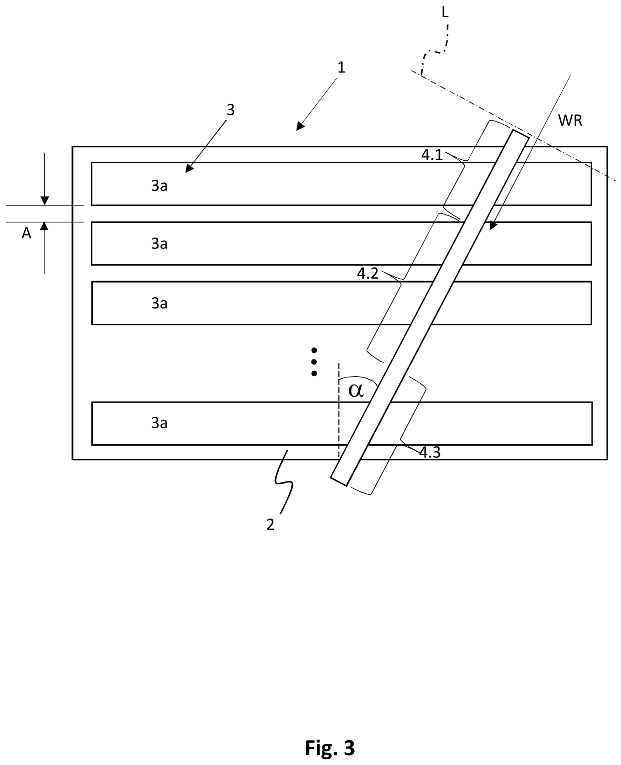

Figur 3 zeigt eine Möglichkeit des Zusammenwirkens von Isolierung 1 und Trägerelement 4. Das Trägerelement 4 ist unter einem Winkel α bezüglich einer Verlaufsrichtung der Abschnitte 3a der Schirmfolie 3 gemäß einer schräg verlaufenden Wickelrichtung WR der Isolierung 1 um eine zu isolierende (Innen-) Leitung angeordnet, welche Leitung in Figur 3 durch ihre Längsachse L symbolisiert ist. Die Wickelrichtung WR ist unter einem rechten Winkel bezüglich der Längsachse L orientiert, sodass das Trägerelement 4 bei einer festen axialen Position um die Leitung herum gewickelt wird.

Vorzugsweise ist der Winkel α möglichst klein und beträgt angenähert oder genau 0 (Null) Grad, sodass die Wickelrichtung WR der Isolierung 1 gerade quer zur Verlaufsrichtung der Abschnitte 3a der Schirmfolie 3 verläuft. In der Wickelrichtung WR kommt es so aufgrund der freien Abstände A zwischen den Abschnitten 3a - trotz ausreichender Abschirmwirkung gegen Wärmestrahlung nicht zu der Ausbildung eines durchgängigen (Wärme-)Leitungspfads.

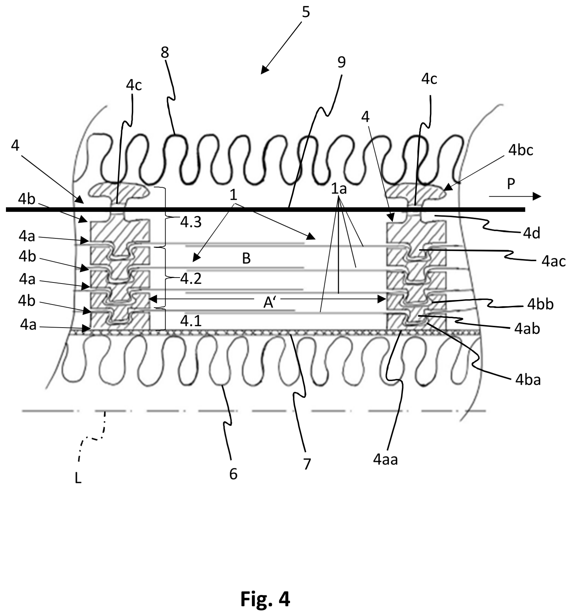

Figur 4 zeigt schematisch und im Längsschnitt entlang der Längsachse L eine isolierte Leitungsanordnung, die insgesamt mit dem Bezugszeichen 5 bezeichnet ist. Sie umfasst - radial von innen nach außen - eine als Ringwellschlauch ausgebildete Innenleitung 6, einen die Innenleitung 6 umgebenden Geflechtschlauch 7, mehrere in einem axialen Abstand A' zueinander angeordnete und spiralförmig aufgewickelte Trägerelemente 4 - auf deren genaue Ausgestaltung nachfolgend noch eingegangen wird -, mehrere Lagen 1a von zwei ebenfalls aufgewickelten Isolierungen 1 sowie eine als Ringwellschlauch ausgebildete Außenleitung 8. Durch entsprechende Durchbrüche 4c in den Trägerelementen 4 ist ein Draht 9 geführt, worauf ebenfalls weiter unten noch genauer eingegangen wird.

**In** Figur 4 sind die Trägerelemente 4 aufgrund der gewählten Darstellung im Querschnitt gezeigt. Auf diese Weise sind die bereits erwähnten Abschnitte 4.1 bis 4.3 mit ihren jeweils unterschiedlich ausgebildeten ersten und zweiten Seiten 4a, 4b gut erkennbar. **In** dem ersten Abschnitt 4.1 weisen die Trägerelemente 4 auf der ersten Seite 4a eine flache Ausgestaltung 4aa zum Anlegen an den Geflechtschlauch 7 und auf der zweiten Seite 4b eine Ausnehmung 4ba auf. In dem zweiten Abschnitt 4.2 weisen die Trägerelemente 4 auf der ersten Seite 4a einen Vorsprung 4ab zum Eingreifen in die Ausnehmung 4ba und auf der zweiten Seite 4b eine entsprechende Ausnehmung 4bb auf. Im weiteren Verlauf des zweiten Abschnitt 4.2 kann das Trägerelement mit den Vorsprüngen 4ab in die genannte Ausnehmung 4bb eingreifen. In dem dritten Abschnitt 4.3 weisen die Trägerelemente 4 auf der ersten Seite 4a wiederum einen Vorsprung 4ac und auf der zweiten Seite 4b eine Abstandhalterstruktur 4bc auf. Die Abstandhalterstruktur 4bc ist endständig konvex (pilzförmig) ausgebildet zum Abstützen der Außenleitung 8. Des Weiteren besitzt die Abstandhalterstruktur 4bc seitliche Ausnehmungen 4d, im Bereich welcher Ausnehmungen 4d der bereits erwähnte Durchbruch 4c angeordnet ist.

Die Lagen 1a der beiden Isolierungen 1 überlappen einander in einem Bereich B, sodass ein Schiebesitz gebildet ist. Dies erhöht die Beweglichkeit der Leitungsanordnung 5.

Zwischen den paarweise in Eingriff stehenden Ausnehmungen und Vorsprüngen der Trägerelemente 4, wie vorstehend beschrieben, ist jeweils eine Lage 1a der Isolierungen 1 klemmend gehalten.

Der Draht 9 kann dafür verwendet werden, die Trägerelemente 4 im Bereich der Abstandhalterstrukturen 4bc zu verformen, um eine Ausdehnung der Trägerelemente 4 in radialer Richtung zu verringern, sodass eine Montage der Außenleitung 8 erleichtert ist. Anschließend kann der Draht 9 Richtung des Pfeils P entfernt werden.

Der Zwischenraum zwischen Innenleitung 6 und Außenleitung 8 ist evakuiert, um Wärmeeinträge durch Konvektion und Konduktion zu unterbinden.

In Figur 5 ist eine abweichende Ausgestaltung der Leitungsanordnung 5 gezeigt, die sich jedoch nur in Bezug auf die Ausgestaltung der Isolierung 1 von der Ausgestaltung in Figur 4 unterscheidet.

Gemäß Figur 5 weisen die einzelnen Lagen 1a der Isolierung 1, die beim Aufwickeln entstanden sind, bei Bezugszeichen 1b jeweils einen Falz auf, welcher Falz 1b eine Längenreserve für Bewegungen insbesondere in axialer Richtung darstellt.

Abweichend von der Ausgestaltung in den Figuren 4 und 5 können die Trägerelemente 4 in dem ersten Bereich 4.1 auf der ersten Seite 4a eine zu der Wellung des inneren Ringwellschlauchs (Innenleitung 6) komplementäre Ausformung aufweisen - insbesondere, wenn kein Geflechtschlauch 7 zum Einsatz kommt. Gleiches gilt für die Abstandhalterstruktur 4bc im Bereich der mit dem äußeren Ringwellschlauch (Außenleitung 8) in Berührung kommenden Außenseite.

## Patentansprüche

1. Trägerelement (4) zur Verwendung mit einer Isolierung (1), die Isolierung (1) aufweisend:
eine Grundfolie (2);
eine Schirmfolie (3);
welche Grundfolie (2) aus einem Material mit geringer Wärmeleitfähigkeit von vorzugsweise etwa 0,01 bis 0,3 W/(m·K) gebildet ist;
welche Schirmfolie (3) zur Reflektion von Strahlung im Infrarotbereich ausgebildet ist, vorzugsweise bei einer Wellenlänge von 0,78 bis 1000 µm, höchst vorzugsweise 3 bis 50 µm;
wobei die Schirmfolie (3) in Form von mehreren diskreten Abschnitten (3a) auf der Grundfolie (2) angeordnet ist, sodass zwischen zwei benachbarten Abschnitten (3a) jeweils ein freier Abstand (A) verbleibt;
welches Trägerelement (4) entlang seiner Längserstreckung aufweist:
a) einen ersten Abschnitt (4.1), in dem das Trägerelement (4) auf einer ersten Seite (4a) eine Anlagestruktur (4aa) zum vorzugsweise formschlüssigen Anlegen an eine zu isolierende Innenleitung (6) und auf einer der ersten Seite (4a) gegenüberliegenden zweiten Seite (4b) eine erste Verbindungsstruktur (4ba) aufweist, vorzugsweise eine Ausnehmung;
b) einen zweiten Abschnitt (4.2), in dem das Trägerelement (4) auf der ersten Seite (4a) eine zweite Verbindungsstruktur (4ab) zum vorzugsweise formschlüssigen Zusammenwirken mit der ersten Verbindungsstruktur (4ba) auf der zweiten Seite (4b) aufweist, vorzugsweise einen Vorsprung; und
c) einen dritten Abschnitt (4.3), in dem das Trägerelement (4) auf der ersten Seite (4a) die zweite Verbindungsstruktur (4ac) und auf der zweiten Seite (4b) eine Abstandhalterstruktur (4bc) zum vorzugsweise formschlüssigen Zusammenwirken mit einer die Innenleitung (6) umgebenden Außenleitung (8) aufweist.

2. Trägerelement (4) nach Anspruch 1 zur Verwendung mit einer Isolierung (1), bei der die Schirmfolie (3) auf die Grundfolie (2) aufgeklebt oder durch Nähen, Falzen oder Clinchen auf der Grundfolie (2) befestigt ist.

3. Trägerelement (4) nach Anspruch 1 oder 2 zur Verwendung mit einer Isolierung (1), bei der die Schirmfolie (3) in Form von Streifen (3a) auf der Grundfolie (2) angeordnet ist, vorzugsweise in Form regelmäßig angeordneter Streifen (3a) mit jeweils gleicher Breite und/oder mit gleichem, konstantem Abstand (A) zwischen den Streifen (3a).

4. Trägerelement (4) nach einem der Ansprüche 1 bis 3 zur Verwendung mit einer Isolierung (1), bei der das Material für die Grundfolie (2) ein Glasfaservlies oder ein Kunststoff, vorzugsweise Kunststofftextil, ist.

5. Trägerelement (4) nach einem der Ansprüche 1 bis 4 zur Verwendung mit einer Isolierung (1), bei der das Material für die Schirmfolie (3) ein reines Metall ist, vorzugsweise Kupfer, Aluminium, Gold oder Silber, oder bei der die Schirmfolie (3) als eine metallisierte Kunststofffolie ausgebildet ist.

6. Trägerelement (4) nach einem der Ansprüche 1 bis 5, welches in einem flexiblen, um die Innenleitung (6) herum wickelbaren Material, vorzugsweise Kunststoff, höchst vorzugsweise PEEK, Polyetheretherketon, ausgebildet ist.

7. Trägerelement (4) nach einem der Ansprüche 1 bis 6, welches
a) in dem ersten Abschnitt (4.1) auf der ersten Seite (4a) eben ausgebildet ist und auf der zweiten Seite (4b) eine Ausnehmung (4ba) aufweist, oder welches in dem ersten Abschnitt (4.1) auf der ersten Seite (4a) eine zu der Wellung eines Wellschlauchs zumindest teilweise komplementäre Ausgestaltung und auf der zweiten Seite (4b) eine Ausnehmung (4ba) aufweist; und
b) in dem zweiten Abschnitt (4.2) auf der ersten Seite (4a) einen zu der Ausnehmung (4ba) in dem ersten Abschnitt (4.1) komplementären Vorsprung (4ab) und auf der zweiten Seite (4b) eine Ausnehmung (4bb) aufweist, vorzugsweise eine mit der Ausnehmung (4ab) in dem ersten Abschnitt (4.1) identische Ausnehmung (4bb); und
c) in dem dritten Abschnitt (4.3) auf der ersten Seite (4a) einen zu der Ausnehmung (4bb) in dem zweiten Abschnitt (4.2) komplementären Vorsprung (4ac) und auf der zweiten Seite (4b) die Abstandhalterstruktur (4bc) aufweist.

8. Trägerelement (4) nach einem der Ansprüche 1 bis 7, welches derart ausgebildet ist, dass bei einem spiralförmigen Aufwickeln des Trägerelements (4) die erste Verbindungsstruktur (4ba) in dem ersten Abschnitt (4.1) und die zweite Verbindungsstruktur (4ab) in dem zweiten Abschnitt (4.2) und/oder die erste Verbindungsstruktur (4ba) in dem zweiten Abschnitt (4.2) und die zweite Verbindungsstruktur (4ac) in dem dritten Abschnitt (4.3) verbindend zusammenwirken, bevorzugt jeweils paarweise miteinander in Eingriff stehen.

9. Trägerelement (4) nach Anspruch 8, bei dem zwischen den zusammenwirkenden Verbindungsstrukturen wenigstens eine Lage (1a) der Isolierung (1) anordenbar ist.

10. Trägerelement (4) nach einem der Ansprüche 1 bis 9, bei dem die Abstandhalterstruktur (4bc) einen Durchbruch (4c) aufweist, welcher Durchbruch (4c) vorzugsweise quer zu einer Längserstreckung des Trägerelements (4) und parallel zu den ersten und zweiten Seiten (4a, 4b) orientiert ist.

11. Trägerelement (4) nach einem der Ansprüche 1 bis 10, bei dem die Abstandhalterstruktur (4bc) mit wenigstens einer seitlichen Ausnehmung (4d) versehen ist.

12. Trägerelement (4) nach einem der Ansprüche 1 bis 11, bei dem die Abstandhalterstruktur (4bc) außen konvex oder mit einer zu der Wellung eines Wellschlauchs zumindest teilweise komplementärer Formgebung ausgebildet ist.

13. Verfahren zum thermischen Isolieren einer Leitungsanordnung (5) mit einer Isolierung (1), welche Isolierung (1) aufweist:
eine Grundfolie (2);
eine Schirmfolie (3);
welche Grundfolie (2) aus einem Material mit geringer Wärmeleitfähigkeit von vorzugsweise etwa 0,01 bis 0,3 W/(m·K) gebildet ist;
welche Schirmfolie (3) zur Reflektion von Strahlung im Infrarotbereich ausgebildet ist, vorzugsweise bei einer Wellenlänge von 0,78 bis 1000 µm, höchst vorzugsweise 3 bis 50 µm;
wobei die Schirmfolie (3) in Form von mehreren diskreten Abschnitten (3a) auf der Grundfolie (2) angeordnet ist, sodass zwischen zwei benachbarten Abschnitten (3a) jeweils ein freier Abstand (A) verbleibt;
unter Verwendung wenigstens eines Trägerelements (4) nach einem der Ansprüche 1 bis 12,
bei dem:
a) die Isolierung (1) spiralförmig umfänglich und mit einer axialen Verlaufskomponente um eine Innenleitung (6) gewickelt wird; und dann
b) eine Außenleitung (8) um die Innenleitung (6) und die Isolierung (1) herum angeordnet wird;
wobei in Schritt a) das Trägerelement (4) zusammen mit der Isolierung (1) um die Innenleitung (6) gewickelt wird, wobei das Trägerelement (4) bei einer bestimmten axialen Position spiralförmig vorzugsweise direkt auf die Innenleitung (6) aufgewickelt wird, sodass eine Lage (1a) der Isolierung (1) jeweils zwischen zwei Wicklungen des Trägerelements (4) angeordnet wird, vorzugsweise eingeklemmt.
